# EUROPÄISCHE PATENTANMELDUNG

(11) **EP 4 428 364 A1**
(43) Veröffentlichungstag der Anmeldung: **11.09.2024**
(21) Anmeldenummer: 23160569.2
(22) Anmeldetag: 07.03.2023
(51) Int. Cl.: F03D 3/02, F03D 3/04

(54) **VERTIKALE STRÖMUNGSANLAGE**

(71) Anmelder: Böyer, Andreas, 48683 Ahaus (DE)
(72) Erfinder: Böyer, Andreas, 48683 Ahaus (DE)
(74) Vertreter: Michalski Hüttermann & Partner Patentanwälte mbB

(57) **Zusammenfassung**

Die Erfindung betrifft eine Strömungsanlage (1) zum Erzeugen von Energie mittels eines strömenden Fluids (2), aufweisend
einen Rotor (3) umfassend mehrere um eine vertikale Drehachse rotierbare Rotorblätter (4),
ein mit dem Rotor (3) gekoppelter Generator zum Umwandeln von Rotationsenergie in elektrische Energie, und
eine Abschirmvorrichtung mit einer ersten Grundfläche (5), einer der ersten Grundfläche (5) gegenüberliegende zweite Grundfläche (6) und zwischen den zwei Grundflächen (5, 6) entlang zumindest eines Teils des Umfangs der Grundflächen (5, 6) angeordnete Mantelfläche (7), wobei die Grundflächen (5, 6) senkrecht zur Drehachse orientiert sind, der Rotor (3) zwischen den Grundflächen (5, 6) angeordnet ist, und der Rotor (3) zumindest teilweise von der Mantelfläche (7) umgeben wird, wobei
die Abschirmvorrichtung dazu ausgestaltet ist, zumindest einen ersten Teil der Rotorblätter vor einem in Richtung des Rotors (3) strömenden Fluids (2) abzuschirmen,
die Abschirmvorrichtung einen Fluideingang (8) aufweist, der dazu ausgestaltet ist, das in Richtung des Rotors strömende Fluid (2) zu einem zu dem ersten Teil unterschiedlichen zweiten Teil der Rotorblätter (4) zu leiten,
die erste Grundfläche (5) einen Fluidausgang (10) aufweist, der dazu ausgestaltet ist, zumindest ein Teil des strömenden Fluids (2) aus dem Rotor (3) abzuleiten. Auf diese Weise wird die Effizienz und somit der Wirkungsgrad vertikaler Strömungsanlagen verbessert.

## Beschreibung

Die Erfindung betrifft eine Strömungsanlage zum Erzeugen von Energie mittels eines strömenden Fluids, aufweisend einen Rotor umfassend mehrere um eine vertikale Drehachse rotierbare Rotorblätter, ein mit dem Rotor gekoppelter Generator zum Umwandeln von Rotationsenergie in elektrische Energie, und eine Abschirmvorrichtung mit einer ersten Grundfläche, einer der ersten Grundfläche gegenüberliegende zweite Grundfläche und zwischen den zwei Grundflächen entlang zumindest eines Teils des Umfangs der Grundflächen angeordnete Mantelfläche, wobei die Grundflächen senkrecht zur Drehachse orientiert sind, der Rotor zwischen den Grundflächen angeordnet ist, und der Rotor zumindest teilweise von der Mantelfläche umgeben wird.

Herkömmlicherweise Strömungsanlagen, wie beispielsweise die sogenannten Windkrafträder, sind sehr große Strömungsanlagen, die so konzipiert sind, dass ein strömendes Fluid, wie in diesem Beispiel Wind, einen Rotor bzw. die Rotorblätter antreibt. Horizontale Windkraftanlagen müssen große und lange Rotorblätter aufweisen, damit ein effizienter Wirkungsgrad gewährleistet werden kann. Dementsprechend sind sie sowohl in der Herstellung als auch in der Installation auf Grund ihrer Größe sehr kostenintensiv und benötigen große freie Flächen für die Installation.

Vertikale Windkraftanlagen hingegen können kleiner dimensioniert werden und fallen in der Regel wartungsärmer aus. Wartungsintensive Komponenten, wie insbesondere der Generator, sind anders als bei horizontalen Windkraftanlagen, in Bodennähe angeordnet, sodass sie leichter zugänglich sind. Bei vertikalen Windkraftanlagen rotieren die Rotorblätter um eine vertikale Achse. Ein Problem bei vertikalen Windkraftanlagen besteht jedoch darin, dass auf Grund der vertikal orientierten Drehachse zwar ein Teil der Rotorblätter von dem Wind angetrieben wird, der gegenüberliegende Teil jedoch gegen die Windrichtung angetrieben wird, sodass die Windkraftanlage weniger effizient arbeiten kann und der Wirkungsgrad verringert wird. Physikalisch sind vertikale Windkraftanlagen daher um mindestens 30 Prozent leistungsschwächer als die heute üblichen horizontalen Windkraftanlage.

Die aus dem Stand der Technik bekannten Vorrichtungen oder Verfahren erlauben es bisher noch nicht, vertikale Strömungsanlagen derart zu realisieren, dass der Betrieb solcher Anlagen wirtschaftlich und leichter umsetzbar ist.

Davon ausgehend ist es die Aufgabe der Erfindung, die Effizienz und somit den Wirkungsgrad vertikaler Strömungsanlagen zu verbessern.

Diese Aufgabe wird durch den Gegenstand des Patentanspruchs 1 gelöst. Bevorzugte Weiterbildungen finden sich in den Unteransprüchen.

Erfindungsgemäß ist somit eine Strömungsanlage zum Erzeugen von Energie mittels eines strömenden Fluids vorgesehen, die einen Rotor umfassend mehrere um eine vertikale Drehachse rotierbare Rotorblätter, einen mit dem Rotor gekoppelter Generator zum Umwandeln von Rotationsenergie in elektrische Energie, und eine Abschirmvorrichtung mit einer ersten Grundfläche, einer der ersten Grundfläche gegenüberliegende zweite Grundfläche und zwischen den zwei Grundflächen entlang zumindest eines Teils des Umfangs der Grundflächen angeordnete Mantelfläche aufweist, wobei die Grundflächen senkrecht zur Drehachse orientiert sind, der Rotor zwischen den Grundflächen angeordnet ist, und der Rotor zumindest teilweise von der Mantelfläche umgeben wird, wobei die Abschirmvorrichtung dazu ausgestaltet ist, zumindest einen ersten Teil der Rotorblätter vor einem in Richtung des Rotors strömenden Fluids abzuschirmen, die Abschirmvorrichtung einen Fluideingang aufweist, der dazu ausgestaltet ist, das in Richtung des Rotors strömende Fluid zu einem zu dem ersten Teil unterschiedlichen zweiten Teil der Rotorblätter zu leiten, die erste Grundfläche einen Fluidausgang aufweist, der dazu ausgestaltet ist, zumindest ein Teil des strömenden Fluids aus dem Rotor abzuleiten.

Es ist somit ein maßgeblicher Punkt der Erfindung, dass auf Grund der Abschirmvorrichtung der Teil der Rotorblätter, der gegen die Strömungsrichtung des Fluids läuft, abgeschirmt wird und das in den Rotor einströmende Fluids in vertikaler Richtung durch eine der Grundflächen abfließen kann. Auf diese Weise kann das strömende Fluid in vertikaler Richtung, beispielsweise nach oben, entweichen, sodass Verwirbelungen innerhalb des Rotors bzw. zwischen den Rotorblättern entstehen, die die Rotorblätter weiter antreiben. Im Ergebnis kann dadurch die Effizienz weiter gesteigert werden, da auch ein geringer Fluidstrom die Rotorblätter antreiben kann und zusätzliche Verwirbelungen die Effizienz weiter steigern.

Ist vorliegend die Rede von einem "Fluideingang" oder "Fluidausgang" sind damit jeweils Öffnungen in den Grundflächen bzw. in der Abschirmvorrichtung gemeint. Dabei können die Öffnungen insbesondere als Schlitze oder Aussparungen unterschiedlicher Größe ausgestaltet sein. Die Öffnungen können vorzugsweise auch dadurch realisiert werden, dass kein Material vorhanden ist. Dies ist beispielsweise der Fall, wenn die Mantelfläche der Abschirmvorrichtung nicht um 360°, sondern lediglich um 300° um die Grundflächen angeordnet ist, sodass die offenen, nicht abgedeckten 60° eine Öffnung im Sinne der Erfindung darstellen.

Unter "Fluid" wird vorliegend vorzugsweise Wasser und/oder Luft verstanden. Damit sind als Strömungsanlagen vorzugsweise Windkraft- oder Wasserkraftanlagen gemeint.

Gemäß einer bevorzugten Weiterbildung der Erfindung sind der Rotor und die Abschirmvorrichtung derart zueinander angeordnet und ausgestaltet, dass im Inneren der Abschirmvorrichtung mittels des Rotors ein Fluidwirbel erzeugbar ist. Mit Fluidwirbel ist insbesondere ein Wirbel nach Art einer Windhose bzw. Wasserhose oder Tornado gemeint. Der Wirbel erstreckt sich spiralförmig in vertikaler Richtung und treibt die Rotorblätter über mehrere Umrundungen weiter an. Durch rotierende Strömungen entstehen stärkere Strömungen in dem Fluid, sodass die Rotorblätter effizienter angetrieben werden können. Dabei nimmt insbesondere der Fluiddruck ausgehend vom Rand in Richtung Mittelpunkt in radialer Richtung ab.

Gemäß einer bevorzugten Weiterbildung der Erfindung umgibt die Mantelfläche den Rotor entlang wenigstens 55% des Umfangs der Grundfläche, bevorzugt wenigstens 75% des Umfangs der Grundfläche, weiter bevorzugt entlang wenigstens 95% des Umfangs der Grundfläche. Bei einer kreisförmigen Grundfläche bzw. einer zylinderförmigen Anordnung entspricht das insbesondere eine Ummantelung des Rotors entlang wenigstens ca. 200°, bevorzugt wenigstens ca. 270°, besonders bevorzugt wenigstens ca. 340°. Auf diese Weise ist mehr als die Hälfte des Rotors von der Abschirmvorrichtung bedeckt und die Rotorblätter vor dem entgegen die Bewegungsrichtung der Rotorblätter strömenden Fluids geschützt. Das einströmende Fluid kann nicht sofort entweichen, sondern wird zumindest teilweise auf eine Kreisbahn gezwungen.

Gemäß einer bevorzugten Weiterbildung der Erfindung weist der Fluideingang eine Auffangvorrichtung auf, die dazu ausgestaltet ist, strömendes Fluid zum Fluideingang hin zu lenken. Am Fluideingang, der als Öffnung ausgestaltet ist, ist eine zusätzliche Auffangvorrichtung angeordnet. Die Auffangvorrichtung kann dabei vorzugsweise analog zum Prinzip eines Trichters das strömende Fluid auf einer Fläche, die größer als der Fluideingang ist, einfangen und in Richtung des Fluideingangs lenken. Die Auffangvorrichtung kann alternativ vorzugsweise ein einzelnes Lenkblech aufweisen, das das Fluid ebenfalls zum Fluideingang hin lenkt. Auf diese Weise wird die Menge an Fluid, die durch den Fluideingang zum Rotor hin transportiert werden kann, erhöht.

Gemäß einer bevorzugten Weiterbildung der Erfindung weist die zweite Grundfläche einen Fluidausgang auf. Der Fluidausgang ist vorzugsweise wendelförmig, sodass das Fluid spiralförmig aus dem Rotor abgeleitet wird. Dadurch kann die Strömung bzw. der Wirbel aus dem Inneren des Rotors beibehalten und in der gleichen Form abtransportiert werden, ohne dass die Strömungsrichtung oder Strömungsart verändert wird und Widerstände entstehen. Alternativ oder zusätzlich weist die Mantelfläche gemäß einer bevorzugten Weiterbildung der Erfindung wenigstens einen Fluidausgang auf. Auf diese Weise kann zusätzlich zum Austritt an einer oder beider Grundflächen das Fluid anteilsweise auch über die Mantelfläche in horizontaler Richtung abgegeben werden. Je nach Fluidmenge kann dies sinnvoll sein, um das Fluid schnell aus dem Rotor abzutransportieren und Platz für neues einströmendes Fluid, das die Rotorblätter stärker antreibt, zu schaffen. Die Öffnungen des Fluideingangs und/oder des Fluidausgangs sind insbesondere als steuerbare Blenden ausgestaltet, die je nach Fluidmenge bzw. Stärke der Strömung geöffnet oder geschlossen werden können. Dadurch wird gewährleistet, dass der Fluidfluss im Inneren der Abschirmvorrichtung stets gesteuert werden kann, sodass eine gesteigerte Effiziens erreicht wird.

Gemäß einer bevorzugten Weiterbildung der Erfindung sind die Grundflächen kreisförmig. In diesem Fall ist die Abschirmvorrichtung zylinderförmig als Mantel um die kreisförmigen Grundflächen angeordnet. Im Inneren des Zylinders befindet sich der Rotor mit den Rotorblättern. Somit wird gewährleistet, dass jedes Rotorblatt den gleichen Abstand zur Abschirmvorrichtung aufweist und keine ungewünschten Verwirbelungen aufgrund unterschiedlicher Geometrien im Inneren der Abschirmvorrichtung entstehen.

Gemäß einer bevorzugten Weiterbildung der Erfindung ist die Mantelfläche zumindest teilweise spiralförmig ausgestaltet und um den Rotor entlang wenigstens 370°, bevorzugt entlang wenigstens 420°, weiter bevorzugt entlang wenigstens 540° angeordnet. Mit spiralförmig ist insbesondere die Form eines Schneckenhauses gemeint. Durch die Spiralform kann das Fluid zur Fluidöffnung hingeleitet und gleichzeitig bereits auf eine Kreisbahn gezwungen werden, sodass beim Treffen auf die Rotorblätter weniger Verwirbelungen entstehen.

Gemäß einer bevorzugten Weiterbildung der Erfindung sind die Rotorblätter schaufelförmig ausgestaltet. Die Schaufelform gewährleistet eine größere Angriffsfläche für das einströmende Fluid, sodass die Rotorblätter effizienter angetrieben werden.

Gemäß einer bevorzugten Weiterbildung der Erfindung weisen die Rotorblätter jeweils an der zur Mantelfläche gelegenen Seite einen Flügel auf. Zudem ist der Flügel an der zur Mantelfläche zugewandten Seite, ähnlich eines Flugzeugflügels, bauchförmig ausgestaltet. Auf diese Weise kann zwischen dem Flügel und der Mantelfläche der Abschirmvorrichtung ein negativer Bodeneffekt erzeugt werden. Dabei saugt sich der Flügel an die Mantelfläche an. Auf den Rotor bzw. Rotorblätter wirkt somit eine höhere Kraft, sodass die Effektivität weiter gesteigert werden kann.

Gemäß einer bevorzugten Weiterbildung der Erfindung ist die Abschirmvorrichtung um die vertikale Drehachse rotierbar. Durch Rotation der Abschirmvorrichtung kann auch der Fluideingang um die vertikale Drehachse rotiert werden. Auf diese Weise wird es ermöglicht, das Fluid aus unterschiedlichen Richtungen einzufangen und den Fluideingang entsprechend der Strömungsrichtung auszurichten. Darüber hinaus kann die Abschirmvorrichtung bei zu starkem Fluidfluss, wie beispielsweise bei zu starkem Wind, so gedreht und ausgerichtet werden, dass weniger Fluid eingefangen wird. Dadurch wird die Drehzahl des Rotors steuerbar. Bei zu starkem Fluidfluss, wie beispielsweise bei zu starkem Wind, kann die Abschirmvorrichtung insbesondere derart ausgerichtet werden, dass die Rotorblätter still stehen und nicht mehr rotieren, sodass die vertikale Strömungsanlage auch bei extremen Wetterlagen geschützt werden kann ohne sie ausschalten oder massiv bauen zu müssen.

Gemäß einer bevorzugten Weiterbildung der Erfindung ist die Abschirmvorrichtung mit einem Strömungssensor zum Messen der Strömungsrichtung des Fluids koppelbar und ist die Abschirmvorrichtung abhängig von der Strömungsrichtung nachführbar. Unter Strömungssensor wird ein Sensor verstanden, der dazu ausgestaltet ist, die Strömungsrichtung des Fluids zu Detektieren. Vorzugsweise umfasst der Strömungssensor einen Windsensor oder einen Wassersensor zum Detektieren der Strömungsrichtung von Wind bzw. Wasser. Durch die Kopplung von Strömungssensor und Abschirmvorrichtung wird es ermöglicht, die Abschirmvorrichtung insbesondere in Echtzeit an die Strömungsrichtung anzupassen. Somit kann die Abschirmvorrichtung an die Strömungsrichtung angepasst werden, damit der Fluideingang stets in Richtung der Strömungsrichtung ausgerichtet werden kann und das Fluid in den Fluideingang strömt. Bei zu starkem Fluidfluss, wie beispielsweise bei zu starkem Wind, kann die Abschirmvorrichtung auch gezielt in den Fluidstrom gedreht werden, sodass die vertikale Strömungsanlage bzw. der Rotor vor einer zu starken Krafteinwirkung geschützt werden kann. Die Abschirmvorrichtung schirmt dann den Teil der Rotorblätter ab, der ansonsten gegen den Fluidstrom rotieren würde. Selbst bei Richtungsänderungen des Fluids, kann die Strömungsanlage effizient betrieben werden, da der Fluideingang dem Fluidstrom nachgeführt wird.

Erfindungsgemäß ist weiterhin eine Anordnung mit einer Mehrzahl an oben beschriebenen Strömungsanlagen vorgesehen, wobei die Strömungsanlagen nebeneinander in einer Reihe angeordnet sind. Die Anordnung in Reihe hat den Vorteil, dass Teile der Abschirmvorrichtung von zwei nebeneinander angeordneten Strömungsanlagen geteilt werden können. Je größer die Strömungsanlage wird, desto größer ist auch der Durchmesser. Bei einem Durchmesser von mehreren Metern müsste auch die Abschirmvorrichtung entsprechend dick ausgestaltet sein. Je größer die Strömungsanlage, desto größer werden die Kräfte, denen die Komponenten ausgesetzt sind, sodass insgesamt auch die Materialkosten steigen. Die Strömungsanlagen, die in Reihe angeordnet sind, können jeweils kompakter gebaut werden. Ausschlaggebend für eine effiziente Arbeitsweise und einen hohen Wirkungsgrad ist nicht das Volumen, sondern die Fläche. Mehrere kleinere Strömungsanlagen sind somit effizienter und kostengünstiger als eine große Strömungsanlage. Aufgrund der Abschirmvorrichtung können die Strömungsanlagen nebeneinander angeordnet werden, ohne dass sie sich auf Grund von Verwirbelungen gegenseitig negativ beeinflussen.

Gemäß einer bevorzugten Weiterbildung der Erfindung sind die Strömungsanalgen zum Mittelpunkt der Reihe punktsymmetrisch angeordnet. Vorzugsweise ist vorgesehen, dass die gesamte Reihe als Einheit um den Mittelpunkt rotiert werden kann. Auf diese Weise lassen sich alle Fluideingänge gleichzeitig entsprechend der Strömungsrichtung des Fluids ausrichten. Bei einem zu starken Fluidstrom, beispielsweise bei Sturm, kann die gesamte Reihe längs in den Wind gedreht werden, sodass die Angriffsfläche deutlich verkleinert wird. Insbesondere ist vorgesehen, dass mehrere Reihen an Strömungsanlagen übereinander angeordnet werden und somit eine Matrixform an Strömungsanlagen entsteht.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: eine Strömungsanlage gemäß einem bevorzugten Ausführungsbeispiel der Erfindung in einer perspektivischen Ansicht,
- Fig. 2a-d: unterschiedliche Ausgestaltungen der Strömungsanlage gemäß bevorzugter Ausführungsbeispiele der Erfindung jeweils in einer schematischen Draufsicht,
- Fig. 3a: eine Anlage mit mehreren Strömungsanlagen gemäß einem bevorzugten Ausführungsbeispiel der Erfindung in einer schematischen Draufsicht,
- Fig. 3b: eine Anlage mit mehreren Strömungsanlagen gemäß einem bevorzugten Ausführungsbeispiel der Erfindung in einer perspektivischen Ansicht.

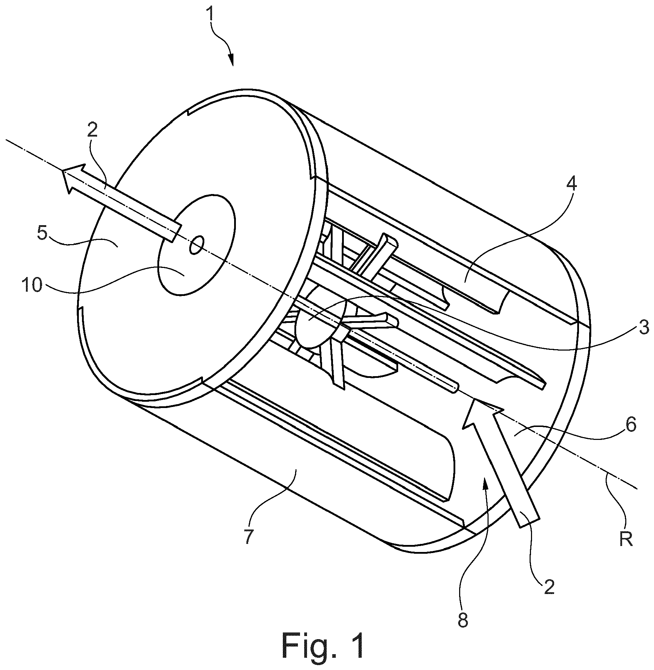

Aus Fig. 1 ist schematisch eine Strömungsanlage gemäß einem bevorzugten Ausführungsbeispiel der Erfindung in einer perspektivischen Ansicht ersichtlich. Die Strömungsanlage 1 weist zwei kreisförmige Grundflächen 5, 6 auf, zwischen denen ein Rotor 3 angeordnet ist. Der Rotor 3 und seine Rotorblätter 4 sind von einer Mantelfläche 7 teilweise umgeben. Insgesamt ähnelt die Form der Strömungsanlage 1 einem Hohlzylinder. Die Rotorblätter 4 rotieren um die Rotationsachse R, die im betriebsbereiten Zustand vertikal ausgerichtet ist. Die von der Abschirmvorrichtung umfasste Mantelfläche 7 schirmt die Rotorblätter 4 vor ungewünschten Fluidstrom ab. Das Fluid 2 strömt durch den Fluideingang 8 in das Innere der Strömungsanlage 1 zu den Rotorblättern 4 und treibt diese zur Rotation an. Im Inneren der Strömungsanlage 1 wird ein Wirbel erzeugt, der sich spiralförmig zur oberen Grundfläche 5 ausbreitet. Die Grundfläche 5 weist einen als Öffnung ausgestalteten Fluidausgang 10 auf, durch den das Fluid 2 entweichen kann. Die Abschirmvorrichtung bzw. die Mantelfläche 7 sowie die Rotorblätter 4 können unterschiedlich ausgestaltet sein.

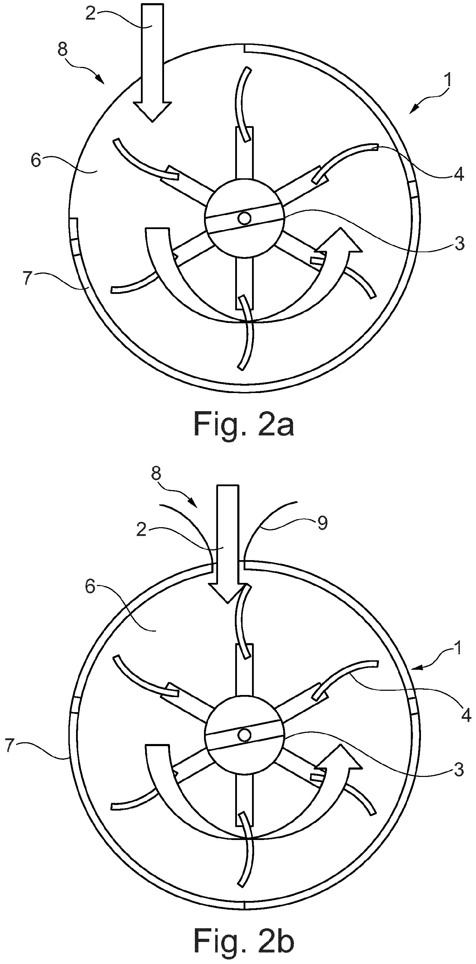

In den folgenden Figuren 2a bis 2d sind mehrere Ausführungsbeispiele dargestellt. Alle vier Figuren 2a bis 2d zeigen eine Strömungsanlage 1 in einer schematischen Draufsicht. Dabei ist der Rotor 3 im Zentrum zwischen zwei Grundflächen 5, 6 angeordnet. Die Rotorblätter 4 rotieren um eine Rotationsachse R, die senkrecht zur Zeichenebene orientiert ist. Entlang des Umfangs der Grundfläche 6 ist eine Mantelfläche 7 angeordnet.

In Fig. 2a ist die Mantelfläche 7 um 270° um den gesamten Umfangs der Grundfläche 6 angeordnet. Die Aussparung der übrigen 90° bildet den Fluideingang 8, durch den das Fluid 2 einströmen und die Rotorblätter 4 antreiben kann. Die gegen die Fluidrichtung rotierenden Rotorblätter 4 werden von der Mantelfläche 7 abgeschirmt. Die gesamte Abschirmvorrichtung kann ebenfalls um die Rotationsachse R rotiert werden, sodass der Fluideingang entsprechend der Strömungsrichtung ausgerichtet werden kann.

In Fig. 2b ist die Mantelfläche um 350° um den gesamten Umfangs der Grundfläche 6 angeordnet. Der Fluideingang 8 ist entsprechend klein dimensioniert. Um dennoch ausreichend Fluid 2 den Rotorblättern 4 zuführen zu können, ist am Fluideingang 8 eine Auffangvorrichtung 9 angeordnet. Die Auffangvorrichtung 9 weist die Form eines Trichters auf und leitet Fluid 2, das nicht direkt auf den Fluideingang 8 trifft zum Fluideingang 8 hin.

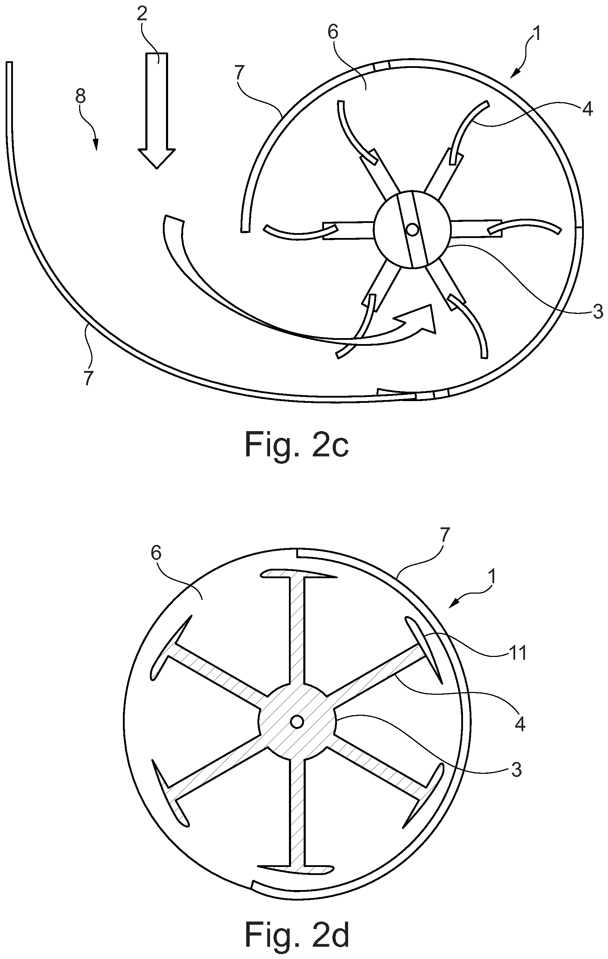

In Fig. 2c ist die Mantelfläche über einen Bereich größer als 360° um die Grundfläche 6 angeordnet. Dadurch überschneidet sich die Mantelfläche in einem Bereich. An diesem Bereich ist die Mantelfläche voneinander beabstandet, sodass die Spiralform eines Schneckenhauses entsteht. Der Bereich, an dem sich die Mantelfläche 7 überschneidet, bildet den Fluideingang 8. Das Fluid 2 wird somit bereits vor Auftreffen auf die Rotorblätter 4 in eine Kreisbahn geleitet, sodass sich der Fluidwirbel im Inneren optimal ausbilden kann und unerwünschte Verwirbelungen verhindert werden können.

In Fig. 2d ist die Mantelfläche über einen Bereich von 200° entlang des Umfangs der Grundfläche 6 angeordnet. Die Rotorblätter 4 weisen an der zur Mantelfläche 7 zeigenden Seite Flügel 11 auf. Die Flügel 11 sind bauchförmig ausgestaltet, sodass zwischen Flügel 11 und Mantelfläche 7 ein negativer Bodeneffekt entsteht. Auf Grund des negativen Bodeneffektes entsteht ein Sog zwischen Flügel 11 und Mantelfläche 7, sodass die Rotorblätter 4 in Rotationsrichtung weiter angetrieben werden und insgesamt stabiler laufen, da Vibrationen durch den Sog unterbunden werden.

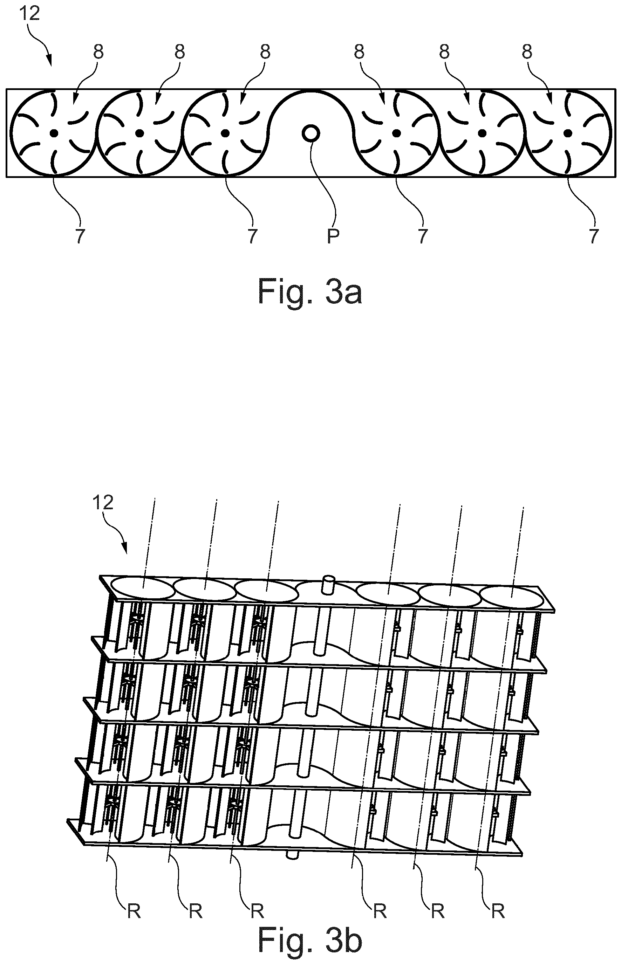

Fig. 3a zeigt eine Anordnung 12 mit mehreren Strömungsanlagen 1, die in einer Reihe angeordnet sind. Die Anordnung in einer Reihe hat den Vorteil, dass Material eingespart werden kann. Dies liegt zum einen daran, dass die Strömungsanlagen 1 jeweils kleiner und die Komponenten somit kleiner und dünner gebaut werden können und zum anderen daran, dass Teile der Komponenten von zwei nebeneinander angeordneten Strömungsanlagen geteilt werden. So stellt die Mantelfläche 7 der einen Strömungsanlage 1 einen Teil der Auffangvorrichtung 9 der benachbarten Strömungsanlage 1 dar. Die Strömungsanlagen 1 sind zum Mittelpunkt P punktsymmetrisch angeordnet. Das bedeutet, dass die Rotorblätter 4 der Strömungsanlagen 1 auf der einen Seite rechtsherum und die Rotorblätter 4 der Strömungsanlagen 1 auf der anderen Seite linksherum rotieren. Die gesamte Reihe kann um den Mittelpunkt P rotiert und entsprechend der Strömungsrichtung des Fluids 2 nachgeführt werden.

Fig. 3b zeigt eine Anordnung 12 mit mehreren Reihen aus Fig 3a, die übereinander angeordnet sind. Auf diese Weise entsteht eine Matrix an Strömungsanlagen 1 mit insgesamt 24 Strömungsanlagen 1. Die übereinander angeordneten Strömungsanlagen 1 rotieren um dieselbe Rotationsachse R.

### Bezugszeichenliste

- 1: Strömungsanlage
- 2: Fluid
- 3: Rotor
- 4: Rotorblätter
- 5: erste Grundfläche
- 6: zweite Grundfläche
- 7: Mantelfläche
- 8: Fluideingang
- 9: Auffangvorrichtung
- 10: Fluidausgang
- 11: Flügel
- R: Rotationsachse
- P: Mittelpunkt

## Patentansprüche

1. Strömungsanlage (1) zum Erzeugen von Energie mittels eines strömenden Fluids (2), aufweisend
einen Rotor (3) umfassend mehrere um eine vertikale Drehachse rotierbare Rotorblätter (4),
ein mit dem Rotor (3) gekoppelter Generator zum Umwandeln von Rotationsenergie in elektrische Energie, und
eine Abschirmvorrichtung mit einer ersten Grundfläche (5), einer der ersten Grundfläche (5) gegenüberliegende zweite Grundfläche (6) und zwischen den zwei Grundflächen (5, 6) entlang zumindest eines Teils des Umfangs der Grundflächen (5, 6) angeordnete Mantelfläche (7), wobei die Grundflächen (5, 6) senkrecht zur Drehachse orientiert sind, der Rotor (3) zwischen den Grundflächen (5, 6) angeordnet ist, und der Rotor (3) zumindest teilweise von der Mantelfläche (7) umgeben wird, wobei
die Abschirmvorrichtung dazu ausgestaltet ist, zumindest einen ersten Teil der Rotorblätter vor einem in Richtung des Rotors (3) strömenden Fluids (2) abzuschirmen,
die Abschirmvorrichtung einen Fluideingang (8) aufweist, der dazu ausgestaltet ist, das in Richtung des Rotors strömende Fluid (2) zu einem zu dem ersten Teil unterschiedlichen zweiten Teil der Rotorblätter (4) zu leiten,
die erste Grundfläche (5) einen Fluidausgang (10) aufweist, der dazu ausgestaltet ist, zumindest ein Teil des strömenden Fluids (2) aus dem Rotor (3) abzuleiten.

2. Strömungsanlage (1) nach Anspruch 1, wobei der Rotor (3) und die Abschirmvorrichtung derart zueinander angeordnet und ausgestaltet sind, dass im Inneren der Abschirmvorrichtung mittels des Rotors (3) ein Fluidwirbel erzeugbar ist.

3. Strömungsanlage (1) nach Anspruch 1 oder 2, wobei die Mantelfläche (7) den Rotor (3) entlang wenigstens 55% des Umfangs der Grundfläche, bevorzugt wenigstens 75% des Umfangs der Grundfläche, weiter bevorzugt entlang wenigstens 95% des Umfangs der Grundfläche (5, 6) umgibt.

4. Strömungsanlage (1) nach einem der vorherigen Ansprüche, wobei der Fluideingang (8) eine Auffangvorrichtung (9) aufweist, die dazu ausgestaltet ist, strömendes Fluid (2) zum Fluideingang (8) hin zu lenken.

5. Strömungsanlage (1) nach einem der vorherigen Ansprüche, wobei die zweite Grundfläche (6) einen Fluidausgang (10) aufweist.

6. Strömungsanlage (1) nach einem der vorherigen Ansprüche, wobei die Mantelfläche (7) wenigstens einen Fluidausgang aufweist.

7. Strömungsanlage (1) nach einem der vorherigen Ansprüche, wobei die Grundflächen (5, 6) kreisförmig sind.

8. Strömungsanlage (1) nach Anspruch 7, wobei die Mantelfläche (7) zumindest teilweise spiralförmig ausgestaltet ist und um den Rotor (3) entlang wenigstens 370°, bevorzugt entlang wenigstens 420°, weiter bevorzugt entlang wenigstens 540° angeordnet ist.

9. Strömungsanlage (1) nach einem der vorherigen Ansprüche, wobei die Rotorblätter (4) schaufelförmig ausgestaltet sind.

10. Strömungsanlage (1) nach einem der vorherigen Ansprüche, wobei die Rotorblätter (4) jeweils an der zur Mantelfläche (7) gelegenen Seite einen Flügel (11) aufweisen und der Flügel (11) an der zur Mantelfläche (7) zugewandten Seite bauchförmig ausgestaltet ist.

11. Strömungsanlage (1) nach einem der vorherigen Ansprüche, wobei die Abschirmvorrichtung um die vertikale Drehachse (R) rotierbar ist.

12. Strömungsanlage (1) nach einem der vorherigen Ansprüche, wobei die Abschirmvorrichtung mit einem Strömungssensor zum Messen der Strömungsrichtung des Fluids (2) koppelbar ist und die Abschirmvorrichtung abhängig von der Strömungsrichtung nachführbar ist.

13. Anordnung (12) mit einer Mehrzahl an Strömungsanlagen (1) jeweils nach einem der vorherigen Ansprüche, wobei die Strömungsanlagen (1) nebeneinander in einer Reihe angeordnet sind.

14. Anordnung (12) nach Anspruch 13, wobei die Strömungsanlagen (1) zum Mittelpunkt (P) der Reihe punktsymmetrisch angeordnet sind.
